# EUROPÄISCHE PATENTSCHRIFT

(11) **EP 3 084 262 B1**
(45) Veröffentlichungstag und Bekanntmachung des Hinweises auf die Patenterteilung: **27.04.2022**
(21) Anmeldenummer: 14814754.9
(22) Anmeldetag: 26.11.2014
(51) Int. Cl.: F16D 13/64, F16F 15/131, F16D 3/12

(54) **ANTRIEBSSTRANG MIT ZWEIMASSENSCHWUNGRAD UND TORSIONSGEDÄMPFTER KUPPLUNGSSCHEIBE**
POWERTRAIN COMPRISING A DUAL MASS FLYWHEEL AND A TORSION-DAMPED CLUTCH DISK
CHAÎNE CINÉMATIQUE ÉQUIPÉE D'UN VOLANT D'INERTIE À DOUBLE MASSE ET D'UN DISQUE D'EMBRAYAGE AMORTI EN TORSION

(30) Priorität: 18.12.2013 DE 102013226329
(43) Veröffentlichungstag der Anmeldung: 26.10.2016
(73) Patentinhaber: Schaeffler Technologies AG & Co. KG, 91074 Herzogenaurach (DE)
(72) Erfinder: BOSSE, Michael, 76547 Sinzheim (DE); SCHULTEIS, David, 76532 Baden-Baden (DE)
(86) Internationale Anmeldenummer: PCT/DE2014/200656
(87) Internationale Veröffentlichungsnummer: WO 2015/090309

(56) Entgegenhaltungen:
- EP-A2- 2 600 030
- DE-A1-102012 205 792
- DE-A1-102012 221 544
- US-A- 5 279 182

## Beschreibung

Die Erfindung betrifft einen Antriebsstrang für ein Kraftfahrzeug umfassend einen Verbrennungsmotor, ein Zweimassenschwungrad mit einem Hauptdämpfer und einem Vordämpfer sowie eine Fahrzeugkupplung.

In Antriebssträngen von Kraftfahrzeugen, Baumaschinen und dergleichen sind Verbrennungsmotoren als Antriebsmaschinen angeordnet, die mit in Brennräumen ablaufenden Verbrennungsvorgängen bauartbedingt ein nicht kontinuierliches Drehmoment auf die den Antriebsstrang antreibende Kurbelwelle übertragen. Daher treten Dreh- oder Torsionsschwingungen auf, zu deren Dämpfung Drehschwingungsdämpfer oder Drehschwingungstilger eingesetzt werden.

Im Antriebsstrang zwischen Verbrennungsmotor und den Antriebsrädern sind eine Fahrzeugkupplung, ein Schaltgetriebe, ein Differenzialgetriebe und jeweils die Baugruppen verbindende Drehmomentübertragungsmittel wie z. B. Seitenwellen zwischen Differenzialgetriebe und angetriebenem Rad angeordnet. Bei einem allradgetriebenen Fahrzeug kommen weitere Antriebskomponenten wie ein Verteilergetriebe, weitere Kupplungen wie eine Haldex-Kupplung und je Achse ein Differenzialgetriebe sowie zwei Seitenwellen hinzu.

Als Drehschwingungsdämpfer sind sogenannte Zweimassenschwungräder (ZMS) bekannt, bei denen, das an der Kurbelwelle angeordnete Schwungrad ein Primärteil mit einer zugeordneten Primärmasse und ein Sekundärteil mit einer zugeordneten Sekundärmasse umfasst und Primärteil und Sekundärteil begrenzt entgegen der Wirkung von Energiespeichern verdrehbar angeordnet sind.

Des Weiteren sind torsionsgedämpfte Kupplungsscheiben (TDKS) bekannt, bei denen die Kupplungsscheibe entgegen der Wirkung von Energiespeichern verdrehbar an einer mit einer Getriebeeingangswelle verbundenen Nabe angeordnet ist.

Zudem sind Fliehkraftpendel als Drehschwingungstilger bekannt, die beispielsweise an der Sekundärmasse eines Zweimassenschwungrades angeordnet sind und eine drehzahladaptive Schwingungstilgung ermöglichen..

Bei Verwendung eines Zweimassenschwungrades mit einem Vor- und einem Hauptdämpfer kann eine Resonanzfrequenz eines der Dämpfer knapp oberhalb der Leerlaufdrehzahl des Verbrennungsmotors auftreten. Die durch diese Resonanzfrequenz auftretenden Drehschwingungen im Antriebsstrang werden als Komforteinbuße wahrgenommen und können zu Einschränkungen in der Betriebsart des Verbrennungsmotors bzw. des Antriebsstranges führen, z. B. indem in bestimmten Drehzahlbereichen eine Zylinderabschaltung zur Vermeidung von Resonanzerscheinungen nicht angesteuert werden kann.

Der Einsatz eines Zweimassenschwungrades bei Fahrzeugen mit Zylinder-Abschaltung oder bei Fahrzeugen mit 3- oder 2-Zylider Motoren erfordert eine sehr geringe Federsteifigkeit im Zweimassenschwungrad, hohe Trägheitsmomente primär und sekundär sowie sehr weiche Seitenwellen, um akzeptable geringe Leerlaufdrehzahlen (Creepingdrehzahlen) zu ermöglichen.

Bei einem Zweimassenschwungrad mit Fliehkraftpendel besteht zwar ein hohes Isolationspotenzial, dies aber in der Regel erst ab ca. 1000 U/min. Mit steigenden Motormomenten werden zudem steifere Seitenwellen eingesetzt, was die Isolationswirkung verschlechtert. Die Tendenz geht derzeit dahin, dass eine ausreichende Isolation bereits ab 800 U/min oder gar weniger gewährleistet werden soll.

Das Dokument EP 2 600 030 A2, welches als der nächstliegende Stand der Technik angesehen wird, offenbart einen Antriebsstrang für ein Kraftfahrzeug umfassend einen Verbrennungsmotor, ein Zweimassenschwungrad mit zumindest einem Hauptdämpfer sowie eine Fahrzeugkupplung, wobei die Fahrzeugkupplung eine Kupplungsscheibenanordnung mit einem Torsionsschwingungsdämpfer umfasst.

Eine Aufgabe der Erfindung ist es daher, die Auswirkungen von Resonanzfrequenzen des Zweimassenschwungrades im Bereich um die oder oberhalb der Leerlaufdrehzahl zu reduzieren.

Dieses Problem wird durch einen Antriebsstrang nach Anspruch 1 gelöst. Bevorzugte Ausgestaltungen bzw. Weiterbildungen der Erfindung sind in den abhängigen Ansprüchen angegeben.

Das oben genannte Problem wird insbesondere gelöst durch einen Antriebsstrang für ein Kraftfahrzeug umfassend einen Verbrennungsmotor, ein Zweimassenschwungrad mit zumindest einem Hauptdämpfer und ggf. einem Vordämpfer sowie eine Fahrzeugkupplung, wobei die Fahrzeugkupplung eine Kupplungsscheibenanordnung mit einem Torsionsschwingungsdämpfer umfasst. Die Kupplungsscheibenanordnung umfasst die Kupplungsscheibe sowie den Torsionsschwingungsdämpfer und ggf. weitere Bauteile wie eine Nabe oder Reibbeläge zum Herstellen einer Reibverbindung mit einer Kupplungsdruckplatte und einer Gegendruckplatte. Das Zweimassenschwungrad umfasst in einer Ausführungsform der Erfindung einen Hauptdämpfer und einen Vordämpfer. Sowohl Hauptdämpfer als auch Vordämpfer umfassen vorzugsweise Druckfedern, insbesondere Spiralfedern, die vorzugsweise als Bogenfedern ausgeführt sind.

Der Torsionsschwingungsdämpfer der Kupplungsscheibenanordnung umfasst in einer Ausführungsform der Erfindung mindestens einen Energiespeicher, der eine Relativdrehung der Kupplungsscheibe gegenüber einer Abtriebswelle gegen eine durch den Energiespeicher bewirkte Rückstellkraft ermöglicht. Die Abtriebswelle ist insbesondere eine Getriebeeingangswelle eines Fahrzeuggetriebes. Der Energiespeicher umfasst vorzugsweise Federelemente, die über einen Betätigungsweg oder -winkel Energie aufnehmen und wieder abgeben können. Zusätzlich können Elemente zur Energiedissipation, insbesondere mittels trockener oder viskoser Reibung vorgesehen sein, die eine zusätzliche Dämpfung des Schwingungssystems bewirken.

Der Energiespeicher umfasst in einer Ausführungsform der Erfindung mindestens eine in einem Kupplungsscheibenkäfig gegen einen Kupplungsscheibenflansch zusammendrückbare Druckfeder. Vorzugsweise sind mehrere Druckfedern vorhanden, die auch aus einer äußeren und einer oder mehrerer darin koaxial angeordneten Innenfedern bestehen kann. Die Druckfeder oder -federn ist/sind vorzugsweise als Bogenfedern ausgeführt.

Die Kupplungsscheibenanordnung weist in einer Ausführungsform der Erfindung bei einer maximalen Relativverdrehung bzw. einem maximalen Übertragungsmoment zwischen Kupplungsscheibe und Abtriebswelle einen Anschlag auf, wobei der Anschlag eine weitere Relativverdrehung der Kupplungsscheibe gegenüber der Abtriebswelle begrenzt. Dadurch wird die maximal speicherbare Energie des Energiespeichers begrenzt. Die Kupplungsscheibenanordnung umfasst daher die Kupplungsscheibe, den oder die Torsionsschwingungsdämpfer sowie den Anschlag. Der Anschlag wird im einfachsten Fall bewirkt indem die Druck- bzw. Bogenfeder oder -federn auf Block gehen, die Federwindungen der Spiraldruckfedern sich also berühren und ein weiteres Zusammendrücken der Federn verhindern. Alternativ oder zusätzlich können auch Anschlagselemente wie Stahlanschläge (Hartanschläge) oder Gummipuffer zwischen der Kupplungsscheibe und der Nabe, mit der die Kupplungsscheibe mit der Getriebeeingangswelle verbunden ist, angeordnet sein. Der Anschlag umfasst in dieser Ausführungsform der Erfindung mindestens ein Pufferelement, das bei der maximalen Relativverdrehung zwischen Kupplungsscheibe und Abtriebswelle einen Kontakt zwischen Kupplungsscheibe und Abtriebswelle herstellt, wobei der Kontakt eine weitere Relativverdrehung der Kupplungsscheibe gegenüber der Abtriebswelle begrenzt. Das Pufferelement ist dazu mit einem der Elemente, beispielsweise der Nabe, fest verbunden und schlägt bei Erreichen des Maximalwinkels an einer Kontaktfläche des anderen Elementes, beispielsweise der Kupplungsscheibe, an. Bei Erreichen des maximalen relativen Verdrehwinkels zwischen Kupplungsscheibe und Nabe wird über das Anschlagselement ein Kontakt zwischen Nabe und Kupplungsscheibe hergestellt, der eine weitere Relativverdrehung zwischen beiden verhindert.

Das maximale Übertragungsmoment, bei dem der Anschlag der Kupplungsscheibenanordnung wirksam wird, ist in einer Ausführungsform der Erfindung kleiner als das maximale Motormoment des Verbrennungsmotors. Wird das maximale Motormoment des Verbrennungsmotors genutzt, so wird der Anschlag zuvor aktiviert. Die maximal durch den Energiespeicher der Kupplungsscheibe speicherbare Energie wird dabei vollständig ausgeschöpft.

Das maximale Übertragungsmoment, bei dem der Anschlag der Kupplungsscheibenanordnung wirksam wird, ist in einer Ausführungsform der Erfindung kleiner als 75 % des maximalen Motormomentes des Verbrennungsmotors. Das maximale Übertragungsmoment, bei dem der Anschlag der Kupplungsscheibenanordnung wirksam wird, ist in einer weiteren Ausführungsform der Erfindung kleiner als 55 % des maximalen Motormomentes des Verbrennungsmotors. Das maximale Übertragungsmoment, bei dem der Anschlag der Kupplungsscheibenanordnung wirksam wird, ist in einer weiteren Ausführungsform der Erfindung kleiner als 50 % des maximalen Motormomentes des Verbrennungsmotors.

Die Federsteifigkeit von Vordämpfer und Hauptdämpfer des Zweimassenschwungrades sowie des Torsionsschwingungsdämpfers der Kupplungsscheibenanordnung und die Massenträgheitsmomente von Zweimassenschwungrad, Kupplungsscheibenanordnung und dem zu den Antriebsrädern hin nachgeordneten Antriebsstrang sind in einer Ausführungsform der Erfindung so gewählt, dass die zweite Eigenfrequenz des Zweimassenschwungrades unterhalb der Leerlaufdrehzahl des Verbrennungsmotors ist.

Die zweite Eigenfrequenz des Zweimassenschwungrades ist in einer Ausführungsform der Erfindung unterhalb von 1000 1/min, in einer weiteren Ausführungsform der Erfindung unterhalb 800 1/min gelegen.

Die torsionsgedämpfte Kupplungsscheibe wird in einer Ausführungsform der Erfindung folglich so ausgelegt, dass nur z. B. 75 % des Motormomentes oder weniger, je nach Motormomentverlauf, über die Feder und der Rest über den Anschlag übertragen wird. Die Verbesserung der Schwingungstilgung wird dadurch im unteren Drehzahlbereich bewirkt, in dem der Motor noch nicht sein maximales Moment erreicht hat.

Ein Ausführungsbeispiel der Erfindung wird nachfolgend anhand der beiliegenden Zeichnungen näher erläutert. Dabei zeigen:
- Fig. 1: eine Prinzipskizze eines erfindungsgemäßen Antriebsstranges;
- Fig. 2: ein Ersatzschaltbild eines erfindungsgemäßen Antriebsstranges;
- Fig. 3: einen beispielhaften Momentenverlauf eines Verbrennungsmotors;
- Fig. 4: ein Momentendiagramm einer erfindungsgemäßen torsionsgedämpften Kupplungsscheibe;
- Fig. 5: Diagramme für unterschiedliche Auslegungen eines erfindungsgemäßen Antriebsstranges;
- Fig. 6: ein weiteres Diagramm für einen erfindungsgemäßen Antriebsstrang;
- Fig. 7: ein Diagramm für einen Antriebsstrang eines Allradfahrzeuges.

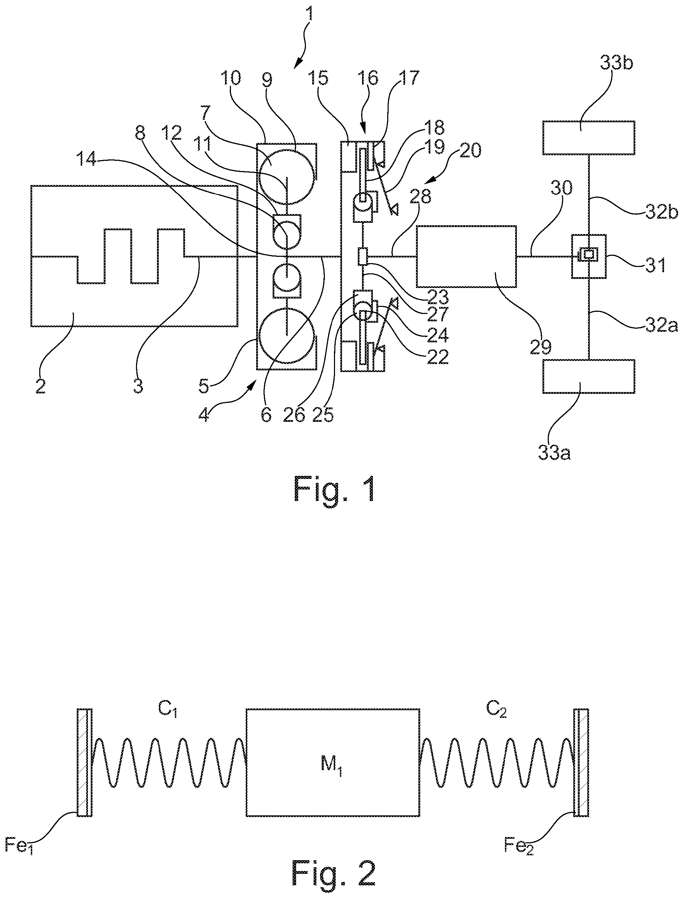

Fig. 1 zeigt eine Prinzipskizze eines erfindungsgemäßen Antriebsstrangs. Der Antriebsstrang 1 umfasst alle Komponenten in einem Kraftfahrzeug, die in diesem die Leistung für den Antrieb generieren und bis auf die Straße übertragen. Der Antriebsstrang umfasst einen Verbrennungsmotor 2 mit einer Kurbelwelle 3. Die in Fig. 1 nicht dargestellten Zylinder mit Kolben und Pleuelstangen wirken mit ebenfalls nicht näher dargestellten Wangen- und Hubzapfen der Kurbelwelle zusammen und erzeugen durch periodische Verbrennungsvorgänge in Brennräumen, die den Kolben zugeordnet sind, ein Antriebsmoment an der Kurbelwelle 3. Der Verbrennungsmotor 2 umfasst einen oder mehrere Zylinder. Je nachdem, ob es sich bei dem Verbrennungsmotor um einen Zweittaktmotor oder um einen Viertaktmotor handelt, werden jeweils nur über einen kurzen Kurbelwellenwinkel °KW innerhalb einer Umdrehung (360° Kurbelwellenwinkel) oder zweier Umdrehungen der Kurbelwelle (720° Kurbelwellenwinkel) ein positives Drehmoment an der Kurbelwelle 3 erzeugt, über den restlichen Kurbelwellenwinkel liegt ein negatives Drehmoment bezogen auf den einzelnen Zylinder an der Kurbelwelle an. Unabhängig von dem Gesamtmassenträgheitsmoment des Antriebsstrangs hat diese systembedingte Arbeitsweise des Verbrennungsmotors zur Folge, dass ein oszillierendes Moment von der Kurbelwelle auf den Antriebsstrang übertragen wird. Das oszillierende Moment hat Drehschwingungen im Antriebsstrang zur Folge. Zusätzliche, auch oszillierende, Momente können beispielsweise durch den Straßenbelag (z. B. Unebenheiten) oder den Straßenverlauf (z. B. Steigungen) über die Antriebsräder in den Antriebsstrang übertragen werden oder können durch Resonanzerscheinungen innerhalb des Antriebsstrangs selbst auftreten.

Die Kurbelwelle 3 ist mit einer Primärmasse 5 bzw. Primärseite eines Zweimassenschwungrades 4 verbunden. Das Zweimassenschwungrad 4 umfasst neben der Primärseite 5 eine begrenzt relativ zur Primärseite verdrehbare Sekundärseite 6. Zwischen der Primärseite 5 und der Sekundärseite 6 sind ein Hauptdämpfer 7 und ein Vordämpfer 8 in Reihe geschaltet angeordnet. Sowohl Hauptdämpfer 7 als auch Vordämpfer 8 können wiederum aus mehreren parallel geschalteten Federanordnungen bestehen und können zusätzlich mit Reibeinrichtungen zur Dämpfung versehen sein. Der Hauptdämpfer 7 umfasst mehrere als Druckfedern ausgelegte Bogenfedern 9, die sich mit jeweils einem ihrer Enden an einem Dämpferkäfig 10 des Hauptdämpfers 7 abstützen und mit dem jeweiligen anderen Ende an einem Hauptdämpferflansch 11 abstützen. Der Hauptdämpferflansch 11 ist mit einem Vordämpferkäfig 12 verbunden. Der Vordämpferkäfig 12 nimmt als Druckfedern ausgelegte Bogenfeldern 13 des Vordämpfers 8 auf, wobei sich die Bogenfedern 13 mit jeweils einem ihrer Enden an dem Vordämpferkäfig 12 abstützen und mit ihrem jeweiligen anderen Ende an einem Vordämpferflansch 14 abstützen. Der Vordämpferflansch 14 ist Teil der Sekundärseite 6 und ist mit einer Gegendruckplatte 15 einer Fahrzeugkupplung 16 verbunden. Die Fahrzeugkupplung 16 dient dazu, wahlweise die Drehmomentübertragung zwischen ihrem Eingang und ihrem Ausgang ein- oder auszuschalten oder beispielsweise beim Anfahren einen Teil des Drehmomentes durch Schleifen zu übertragen und so eine wahlweise Drehmomentübertragung zwischen dem Verbrennungsmotor 2 und nachgeordneten Antriebselementen, die später erläutert werden, zu bewirken. Die Gegendruckplatte 15 ist mit einer axial gegenüber dieser verlagerbaren Druckplatte 17 drehmomentfest verbunden. Zwischen der Gegendruckplatte 15 und der Druckplatte 17 ist eine Kupplungsscheibe 18 angeordnet. Durch axiales Verlagern der Druckplatte 17 vermittels einer Tellerfeder 19, die Teil einer Ausrückvorrichtung 20 ist, kann die Kupplungsscheibe 18 zwischen Druckplatte 17 und Gegendruckplatte 15 eingeklemmt werden, so das durch die so übertragene Gleit- bzw. Haftreibung ein Antriebsmoment übertragen werden kann.

Die Kupplungsscheibe 18 ist Teil einer Kupplungsscheibenanordnung 21. Die Kupplungsscheibenanordnung 21 umfasst neben der Kupplungsscheibe 18 einen Torsionsschwingungsdämpfer 22, einen Abtriebsflansch sowie einen Anschlag 24. Die Kupplungsscheibe 18 ist gegen die Kraft eines Torsionsschwingungsdämpfers 22, der mindestens einen Energiespeicher umfasst, gegenüber dem Abtriebsflansch 23 relativ verdrehbar. Der Anschlag 24 begrenzt den relativen Drehwinkel zwischen Kupplungsscheibe 18 und Abtriebsflansch 23. Der Torsionsschwingungsdämpfer 22 umfasst mehrere Bogenfedern 25, die in einem Kupplungsscheibenkäfig 26, der als Dämpferkäfig für die Bogenfedern 25 fungiert, angeordnet sind und sich mit einem Ende an dem Kupplungsscheibenkäfig 26 abstützen und mit dem anderen Ende an einem Kupplungsscheibenflansch 27, der fest mit dem Abtriebsflansch 23 verbunden ist, abstützen.

Der Abtriebsflansch 23 ist beispielsweise mit einer Steckverzahnung mit einer Getriebeeingangswelle 28 eines Schaltgetriebes 29 verbunden, dessen Getriebeausgangswelle 30 über ein Differenzialgetriebe 31 sowie Kardanwellen 32a und 32b mit Antriebsrädern 33a, 33b verbunden ist. Das Schaltgetriebe 29 dient der wahlweisen Änderung der Untersetzung zwischen Getriebeeingangswelle 28 und die Getriebeausgangswelle 30. Das Differenzialgetriebe 31 dient in an sich bekannter Art und Weise der Aufteilung des Antriebsmoments beispielsweise bei Kurvenfahrt auf die Kardanwellen 32a und 32b, die wiederum drehmomentfest mit den jeweils zugeordneten Antriebsrädern 33a und 33b verbunden sind.

Das Zweimassenschwungrad kann zusätzlich oder alternativ beispielsweise zu dem Vordämpfer mit einer Fliehkraftpendelanordnung versehen sein. Fliehkraftpendel sind als Drehschwingungstilger insbesondere für Antriebsstränge von Kraftfahrzeugen beispielsweise aus der DE 10 2004 011 830 A1 bekannt. Dazu werden Tilgermassen begrenzt verschwenkbar an einem Pendelflansch angeordnet, wobei der Fliehkraftpendelflansch der Fliehkraftpendeleinrichtung mit dem Sekundärflansch des Zweimassenschwungrades vernietet ist. Infolge der durch unterschiedliche Drehbeschleunigung des Pendelflansches bewirkten Pendelbewegung der Tilgermassen gegenüber dem Pendelflansch tritt ein Tilgungseffekt der Drehschwingungen ein.

Die wesentlichen Elemente des Antriebsstranges nach Fig. 1 sind der Verbrennungsmotor 2 mit der Kurbelwelle 3, das Zweimassenschwungrad 4, das eventuell mit einem Fliehkraftpendel versehen ist, die Fahrzeugkupplung 16 mit der Kupplungsscheibe 18, das Schaltgetriebe 29, das Differenzialgetriebe 31, die Kardanwellen 32 und die Antriebsräder 33. Diese Konfiguration gilt sowohl für ein Kraftfahrzeug mit Frontantrieb als auch mit Heckantrieb. Bei einem Allradfahrzeug erfolgt mit einem Verteilergetriebe mit fester oder nach Art eines Differenzialgetriebes variabler Momentenverteilung zunächst eine Aufteilung des Antriebsmomentes auf Vorder- und Hinterachse und sodann eine Momentenaufteilung zwischen linkem und rechtem Antriebsrad. Die Getriebeausgangswelle 30 überträgt das Drehmoment dazu auf den Eingang des Verteilergetriebes, dessen zwei Ausgangswellen jeweils mit einem Differenzialgetriebe 31' sowie 31", diese mit Kardanwellen 32a' und 32b' bzw. 32a" und 32b" und diese mit Antriebsrädern 33a', 33b' bzw. 33a", 33b" verbunden sind. Die Vorderräder oder die Hinterräder können mit einer Kupplung, meist als Haldex-Kupplung bezeichnet, zu- oder abgeschaltet werden.

Fig. 2 zeigt ein vereinfachtes mechanisches Ersatzmodell oder Ersatzschaltbild des Antriebsstrangs nach Fig. 1. Die Massenträgheitsmomente von Zweimassenschwungrad, Kupplung und Getriebe sind als eine Masse M₁ modelliert und zusammengefasst. Die Torsionssteifigkeiten von Bogenfeder und Innendämpfer sind als Druckfeder mit der Federsteifigkeit c₁ modelliert. Die Feder mit der Federsteifigkeit c₁ ist eingespannt zwischen der Masse M₁ und einer festen Einspannung Fe₁. Die Torsionssteifigkeiten von Seitenwellen, Kardanwelle und torsionsgedämpfter Kupplungsscheibe sind in einer zweiten Druckfeder mit der Federseitigkeit c₂ zusammengefasst, welche sich wiederum einerseits an der Masse M₁ und andererseits an einer festen Einspannung Fe₂ abstützt. Die Einspannungen Fe₁ und Fe₂ könnten auch zusammengefasst werden, so dass die Federn c₁ und c₂ parallel geschaltet sind bzw. ebenfalls zu einer Feder c₁₂ zusammengefasst werden könnten. Mit der Darstellung nach Fig. 2 mit zwei Federn c₁ und c₂ wird zusätzlich verdeutlicht, dass die Federn c₁ und c₂ einen unterschiedlichen Federweg aufweisen, was bei dem Antriebsstrang einem unterschiedlichen Torsionswinkel, bei dem die jeweiligen Federn einen Anschlag erreichen oder auf Block gehen, entspricht.

Bei dem Ersatzmodell der Fig. 2 werden die Torsionssteifigkeiten und die Massenträgheitsmomente des Antriebsstrangs in einer Gesamtmasse M₁ und zwei Zug/Druckfedern c₁ und c₂ modelliert. Die festen Einspannungen Fe₁ und Fe₂ sind Idealisierungen eines Antriebsmotors bzw. von Antriebsrädern mit jeweils unendlichem Massenträgheitsmoment.

Die Eigenfrequenz des Ersatzmodells nach Fig. 2 bestimmt sich zu 1/(2Pi)*Wurzel (c/J). Die Federseitigkeit c ist hier die Gesamttorsionssteifigkeit des Systems, entsprechend ist das Massenträgheitsmoment J das Gesamtmassenträgheitsmoment des Systems. Je geringer also die Gesamttorsionssteifigkeit (Gesamtsteifigkeit) oder je höher das Massenträgheitsmoment ist, desto niedriger ist die jeweilige Eigenfrequenz der betrachteten Eigenform.

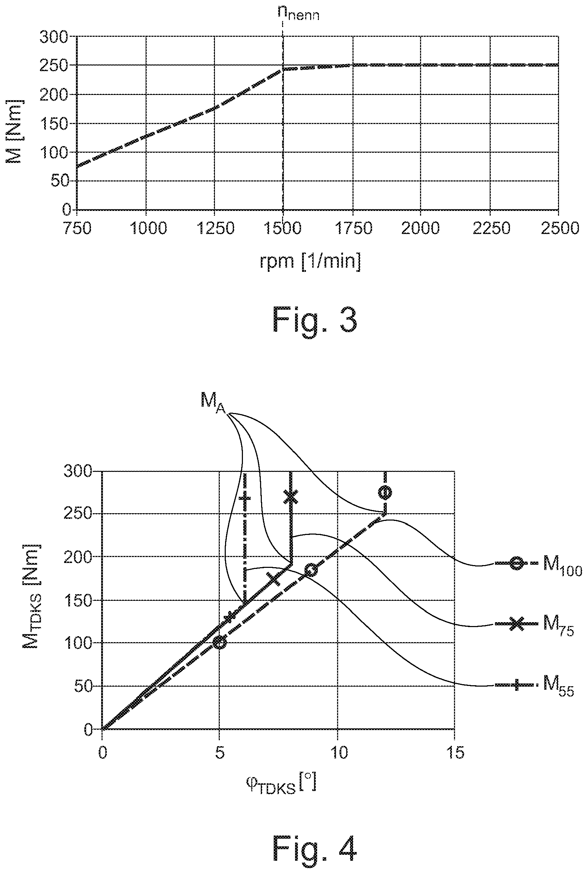

Fig. 3 zeigt ein idealisiert dargestelltes Motormoment eines Dreizylinderturbodieselmotors mit einem Maximalmoment an der Kurbelwelle von 250 Nm und einer Maximalleistung von 77 kW. Dargestellt ist das Motormoment an der Kurbelwelle M in Nm (Newtonmeter) über der Kurbelwellendrehzahl RPM in Umdrehungen pro Minute. Das Motormoment steigt von einer Leerlaufdrehzahl von 750 1/min (Umdrehungen pro Minute, oft auch als U/min bezeichnet) und einem Moment an der Kurbelwelle von etwa 75 Nm bis zu einer Drehzahl (Nenndrehzahl) nₙₑₙₙ von etwa 1500 1/min nahezu linear auf das Maximalmoment von 250 Nm bei 1500 1/min Kurbelwellendrehzahl an und bleibt dann im Wesentlichen konstant. Es sei an dieser Stelle noch einmal betont, dass es sich um einen idealisiert dargestellten Momentenverlauf handelt.

Fig. 4 zeigt für ein idealisiertes Ausführungsbeispiel einer Kupplungsscheibenanordnung 21 nach Fig. 1 das übertragene Moment M_{TDKS} in Newtonmeter über den relativen Verdrehwinkel ϕ_{TDKS} zwischen Kupplungsscheibe 18 und Abtriebsflansch 23. Dargestellt sind drei Varianten, bei denen jeweils bei unterschiedlichen Maximalmomenten M_{A} der Torsionsschwingungsdämpfer 22 auf Anschlag geht bzw. der Anschlag 24 erreicht bzw. aktiviert wird. Mit einer Kurve M₁₀₀ ist ein Momentenverlauf dargestellt, bei dem der Torsionsschwingungsdämpfer 22 der Kupplungsscheibenanordnung 21 bei 100 % des maximalen Motormomentes auf Anschlag geht, im gewählten Ausführungsbeispiel ist dies ein Moment von 250 Nm. Mit M₇₅ ist ein Momentenverlauf dargestellt, bei dem der Torsionsschwingungsdämpfer 22 bei 75 % des maximalen Motormomentes auf Anschlag geht und M₅₅ ist ein Momentenverlauf dargestellt, bei dem der Torsionsschwingungsdämpfer 22 bei 55 % des maximalen Motormomentes auf Anschlag geht. Die Federsteifigkeit bei den Beispielen M₇₅ und M₅₅ ist gleich gewählt, so dass die Steigung beider Momentenverläufe bis zum Erreichen des Maximalmomentes M_{A} gleich sind und im Wesentlichen nur die Lage des Maximalmomentes bei 55% bzw. 75 % des maximalen Motormoments unterscheiden. Die Federsteifigkeit des Torsionsschwingungsdämpfers 22 ist in dem Beispiel der Fig. 4 geringer gewählt als die Federsteifigkeit bei den Momentenverläufen M₅₅ und M₇₅.

Bei den Momentenverläufen des Torsionsschwingungsdämpfers 22 der Kupplungsscheibenanordnung 21 nach den Kurven M₅₅ und M₇₅ geht der Torsionsschwingungsdämpfer 22 im regulären Betrieb bereits auf Anschlag, das Erreichen des Anschlags ist also kein ungewollter Betriebszustand. Bei dieser Auslegung werden nur 75 % (für die Kurve M₇₅) bzw. 55 % (für die Kurve M₅₅) des maximalen Motormomentes über die Bogenfedern des Torsionsschwingungsdämpfers 22, der Rest bzw. der bei höheren Drehzahlen darüber hinausgehende Teil des Motormomentes über den Anschlag 24 übertragen. Der Torsionsschwingungsdämpfer 22 wird folglich im Wesentlichen im unteren Drehzahlbereich, bei dem noch nicht das maximale Motormoment anliegt, ausgenutzt. Bleibt das Motormoment unterhalb von 75 % (bei der Auslegung nach Kurve M75), was im gewählten Beispiel einer Kurbelwellendrehzahl von etwa 1300 1/min entspricht, bzw. 55 % (bei der Auslegung nach der Kurve M₅₅), was im gewählten Beispiel einer Kurbelwellendrehzahl von etwa 1125 1/min entspricht, so geht der Torsionsschwingungsdämpfer 22 nicht auf Anschlag. Für Kurbelwellenmomente, die unterhalb des jeweiligen Maximalmomentes M_{A} des Torsionsschwingungsdämpfers 22 bleiben, wird daher der Torsionsschwingungsdämpfer 22 in an sich bekannter Art und Weise benutzt. Für eine Eigenfrequenz, die unterhalb der zugehörigen Kurbelwellendrehzahl liegt, wird folglich die volle Dämpfungs- bzw. Isolationsfähigkeit des Gesamtsystems umfassend Torsionsschwingungsdämpfer 22, Vordämpfer 8 und Hauptdämpfer 7 sowie die jeweils zugeordneten Massen- bzw. Massenträgheitsmomente ausgenutzt. Für eine Eigenfrequenz, die oberhalb des Maximalmomentes M_{A} liegt, liefert der auf Anschlag befindliche Torsionsschwingungsdämpfer 22 effektiv keinen Beitrag zur Schwingungsdämpfung.

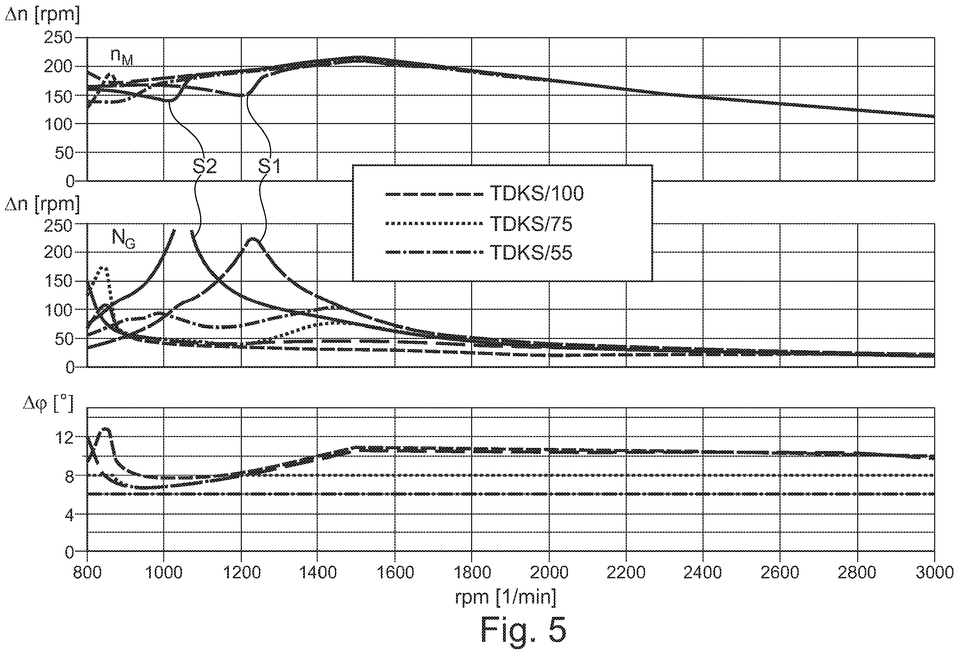

Fig. 5 zeigt Simulationsergebnisse für die Drehzahlamplitude Δn sowie den relativen Drehwinkel Δϕ der Kupplungsscheibenanordnung 21. In der oberen Kurve N_{M} ist der Betrag der Drehzahlamplitude der Kurbelwelle über der mittleren Motordrehzahl im Bereich zwischen 800 und 3000 1/min bei Zug und Volllast im fünften Gang dargestellt, in der mittleren Kurve N_{G} ist die entsprechende Drehzahlamplitude an der Getriebeeingangswelle dargestellt und in der unteren Kurve ist der relative Verdrehwinkel Δϕ der Kupplungsscheibenanordnung 21 über der mittleren Motordrehzahl dargestellt. Die Kurve S1 ist ein Vergleichsbeispiel aus dem Stand der Technik mit steifen Seitenwellen wie beispielsweise für den Einsatz mit einem Einmassenschwungrad ausgelegt, die Kurve S2 ist ein Vergleichsbeispiel für weiche Seitenwellen, wie sie beispielsweise bei einer Zweimassenschwungradanwendung eingesetzt wird. Die Kurven TDKS/100, TDKS/75 und TDKS/55 sind Diagramme für wie zuvor beschrieben erfindungsgemäß ausgelegte Anordnungen.

Die Kurve S2 zeigt ein deutliches lokales Maximum der Drehzahlungleichförmigkeit bei einer mittleren Drehzahl von etwa 1050 1/min. Auch bei weicherer Auslegung der Seitenwellen, wie in Kurve S1 gezeigt, tritt dieses Maximum, wenn auch zu einer höheren mittleren Drehzahl von etwa 1250 1/min hin verschoben, auf. Mit der erfindungsgemäßen Auslegung des Torsionsschwingungsdämpfers 22 auf 75 % sowie auf 55 % (Kurven TDKS/75 und TDKS/55) des maximalen Motormomentes wird dieses Maximum deutlich gedämpft, bei 75 % ist dieses praktisch nicht mehr erkennbar. Bei der Auslegung des Torsionsschwingungsdämpfers 22 zu 100 % des maximalen Motormomentes (Kurve TDKS/100) wird die unterste Eigenfrequenz zu etwa 850 1/min verschoben und verglichen mit den beiden Vergleichsbeispielen, zudem stark gedämpft.

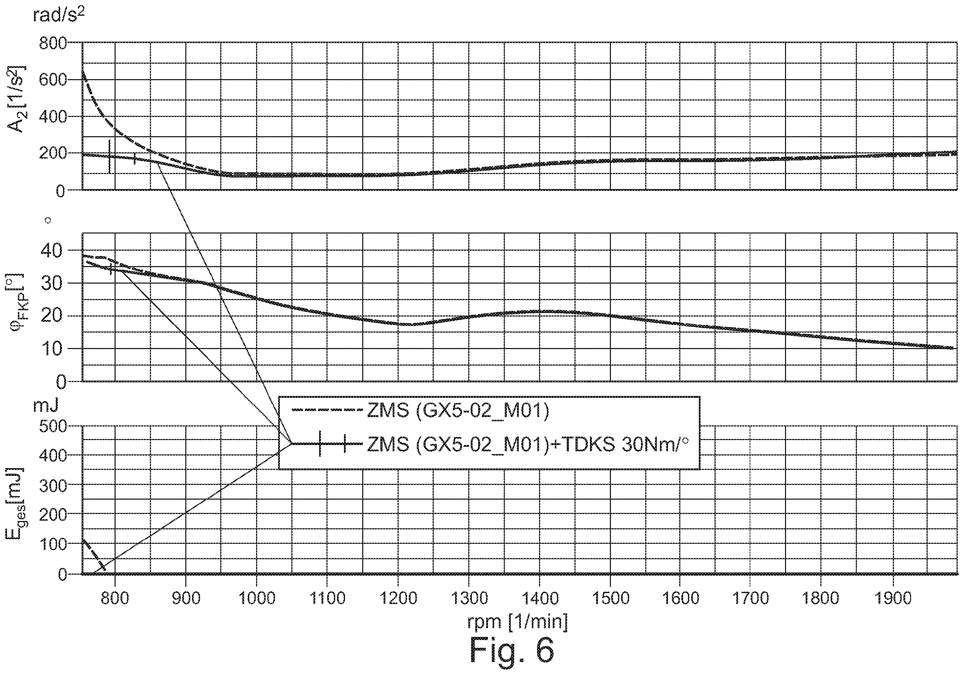

In Fig. 6 sind die Beschleunigungsamplitude A₂ in 1/s², der Schwingwinkel eines Fliehkraftpendels ϕ_{FKP} in Grad sowie die Energie am Fliehkraftpendelanschlag E_{ges} in MJ (Megajoule) über der mittleren Motordrehzahl rpm in 1/min dargestellt. Dargestellt sind zwei Kurvenverläufe, von denen die eine für ein Zweimassenschwungrad steht und die andere, gestrichene Kurve, für ein Zweimassenschwungrad mit zusätzlich einer Kupplungsscheibenanordnung mit Torsionsschwingungsdämpfer wie in dem Ausführungsbeispiel nach Fig. 1 dargstellt. Wie zu erkennen ist, sind die Kurvenverläufe in höheren Drehzahlbereichen deckungsgleich, in unteren Drehzahlbereichen ist jedoch eine deutliche Verbesserung der Schwingungsisolation bei dem Ausführungsbeispiel mit dem zusätzlichen Torsionsschwingungsdämpfer in der Kupplungsscheibenanordnung zu erkennen. Insbesondere die Beschleunigungsamplitude zweiter Ordnung wird in einem Drehzahlbereich unterhalb von etwa 900 1/min deutlich geringer und erreicht bei der Minimaldrehzahl von 750 1/min bei der erfindungsgemäßen Anordnung nur noch etwa 200 1/s², während dieser Wert bei dem Vergleichsbeispiel bei 600 liegt. Des Weiteren werden bei der erfindungsgemäßen Anordnung Anschläge des Fliehkraftpendels bei Drehzahlen unterhalb von 800 1/min vermieden.

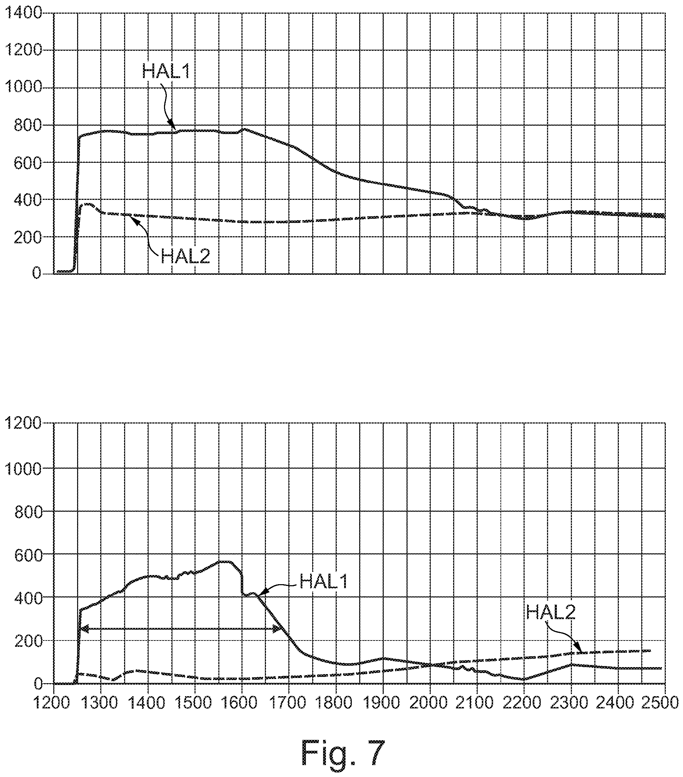

Fig. 7 zeigt ein Beispiel eines allradgetriebenen Fahrzeugs bei geöffneter Haldex-Kupplung (also bei Antrieb nur einer Achse) bei Zug und Volllast im sechsten Gang. Dargestellt ist sowohl in dem oberen als auch unteren Diagramm die Amplitude der Winkelbeschleunigung als Betrag der Winkelbeschleunigung in 1/s². Eine Kurve HAL1 zeigt jeweils ein Zweimassenschwungrad ohne zusätzlichen Torsionsschwingungsdämpfer 23 in der Kupplungsscheibenanordnung 21, eine Kurve HAL2 zeigt ein erfindungsgemäßes Ausführungsbeispiel. Das obere Diagramm zeigt die Winkelbeschleunigung über der mittleren Drehzahl für die Getriebeeingangswelle, das untere Diagramm die Winkelbeschleunigung über der mittleren Drehzahl für die Haldex-Eingangswelle. In Falle des Zweimassenschwungrads ohne Torsionsschwingungsdämpfer 22 in der Kupplungsscheibenanordnung 21 könnte keine Zylinderabschaltung bis ca. 1700 1/min bei geöffneter Haldex-Kupplung zugelassen werden (dies ist durch einen Doppelpfeil markiert), da dann ein deutliches Schlagschraubern auftritt. Bei der erfindungsgemäßen Auslegung ist dem gegenüber eine Zylinderabschaltung über den gesamten Drehzahlbereich möglich.

### Bezugszeichenliste.

- 1: Antriebsstrang
- 2: Verbrennungsmotor
- 3: Kurbelwelle
- 4: Zweimassenschwungrad
- 5: Primärseite
- 6: Sekundärseite
- 7: Hauptdämpfer
- 8: Vordämpfer
- 9: Bogenfeder Hauptdämpfer
- 10: Dämpferkäfig Hauptdämpfer
- 11: Hauptdämpferflansch
- 12: Vordämpferkäfig
- 13: Bogenfeder Vordämpfer
- 14: Vordämpferflansch
- 15: Gegendruckplatte
- 16: Fahrzeugkupplung
- 17: Druckplatte
- 18: Kupplungsscheibe
- 19: Tellerfeder
- 20: Ausrückvorrichtung
- 21: Kupplungsscheibenanordnung
- 22: Torsionsschwingungsdämpfer der Kupplungsscheibe
- 23: Abtriebsflansch
- 24: Anschlag
- 25: Bogenfeder Kupplungsscheibe
- 26: Kupplungsscheibenkäfig
- 27: Kupplungsscheibenflansch
- 28: Getriebeeingangswelle
- 29: Schaltgetriebe
- 30: Getriebeausgangwelle
- 31: Differenzialgetriebe
- 32a, 32b: Kardanwelle
- 33a, 33b: Antriebsräder

## Patentansprüche

1. Antriebsstrang (1) für ein Kraftfahrzeug umfassend einen Verbrennungsmotor (2), ein Zweimassenschwungrad (4) mit zumindest einem Hauptdämpfer (7) sowie eine Fahrzeugkupplung (16), wobei die Fahrzeugkupplung (16) eine Kupplungsscheibenanordnung (21) mit einem Torsionsschwingungsdämpfer (22) umfasst, wobei die Federsteifigkeit eines Vordämpfers (8) und des Hauptdämpfers (7) des Zweimassenschwungrades (4) sowie des Torsionsschwingungsdämpfers (22) der Kupplungsscheibenanordnung (21) und die Massenträgheitsmomente von Zweimassenschwungrad (4), Kupplungsscheibenanordnung (21) und dem zu Antriebsrädern (33a, 33b) hin nachgeordneten Antriebsstrang so gewählt sind, dass die zweite Eigenfrequenz des Zweimassenschwungrades (4) unterhalb der Leerlaufdrehzahl des Verbrennungsmotors (2) ist.

2. Antriebsstrang nach Anspruch 1, **dadurch gekennzeichnet, dass** die zweite Eigenfrequenz des Zweimassenschwungrades (4) unterhalb von 800 1/min gelegen ist.

3. Antriebsstrang nach Anspruch 1 oder 2, **dadurch gekennzeichnet, dass** der Torsionsschwingungsdämpfer (22) der Kupplungsscheibenanordnung (21) mindestens einen Energiespeicher (25) umfasst, der eine Relativdrehung der Kupplungsscheibe (18) gegenüber einer Abtriebswelle (28) gegen eine durch den Energiespeicher (25) bewirkte Rückstellkraft ermöglicht.

4. Antriebsstrang nach Anspruch 3, **dadurch gekennzeichnet, dass** der Energiespeicher mindestens eine in einem Kupplungsscheibenkäfig (26) gegen einen Kupplungsscheibenflansch (27) zusammendrückbare Bogenfeder (25) umfasst.

5. Antriebsstrang nach Anspruch 3 oder 4, **dadurch gekennzeichnet, dass** die Kupplungsscheibenanordnung (21) bei einer maximalen Relativverdrehung bzw. einem maximalen Übertragungsmoment zwischen Kupplungsscheibe (18) und Abtriebswelle (28) einen Anschlag (24) aufweist, wobei der Anschlag (24) eine weitere Relativverdrehung der Kupplungsscheibe (18) gegenüber der Abtriebswelle (28) begrenzt.

6. Antriebsstrang nach Anspruch 5, **dadurch gekennzeichnet, dass** der Anschlag (24) Pufferelemente umfasst, die bei der maximalen Relativverdrehung zwischen Kupplungsscheibe (18) und Abtriebswelle (28) einen Kontakt zwischen Kupplungsscheibe (18) und Abtriebswelle (28) herstellt, der eine weitere Relativverdrehung der Kupplungsscheibe (18) gegenüber der Abtriebswelle (28) begrenzt.

7. Antriebsstrang nach einem der vorhergehenden Ansprüche, **dadurch gekennzeichnet, dass** das maximale Übertragungsmoment, bei dem der Anschlag (24) der Kupplungsscheibenanordnung (21) wirksam wird, kleiner als das maximale Motormoment des Verbrennungsmotors (2) ist.

8. Antriebsstrang nach einem der vorhergehenden Ansprüche, **dadurch gekennzeichnet, dass** das maximale Übertragungsmoment, bei dem der Anschlag (24) der Kupplungsscheibenanordnung (21) wirksam wird, kleiner als 75 % des maximalen Motormomentes des Verbrennungsmotors (2) ist.

9. Antriebsstrang nach einem der vorhergehenden Ansprüche, **dadurch gekennzeichnet, dass** das maximale Übertragungsmoment, bei dem der Anschlag (24) der Kupplungsscheibenanordnung (21) wirksam wird, kleiner als 55 % des maximalen Motormomentes des Verbrennungsmotors (2) ist.

## Claims

1. A powertrain (1) for a motor vehicle, comprising an internal combustion engine (2), a dual mass flywheel (4) having at least one main damper (7) and a vehicle clutch (16), wherein the vehicle clutch (16) comprises a clutch disk arrangement (21) having a torsional vibration damper (22), wherein the spring stiffness of a pre-damper (8) and of the main damper (7) of the dual mass flywheel (4) and of the torsional vibration damper (22) of the clutch disk arrangement (21) and the mass moments of inertia of the dual mass flywheel (4), clutch disk arrangement (21) and the powertrain arranged downstream of the drive wheels (33a, 33b) are selected such that the second natural frequency of the dual mass flywheel (4) is below the idling speed of the internal combustion engine (2).

2. The powertrain according to claim 1, **characterized in that** the second natural frequency of the dual mass flywheel (4) is below 800 rpm.

3. The powertrain according to claim 1 or 2, **characterized in that** the torsional vibration damper (22) of the clutch disk arrangement (21) comprises at least one energy store (25) which allows relative rotation of the clutch disk (18) with respect to an output shaft (28) against a restoring force caused by the energy store (25).

4. The powertrain according to claim 3, **characterized in that** the energy store comprises at least one arc spring (25) compressible in a clutch disk cage (26) against a clutch disk flange (27).

5. The powertrain according to claim 3 or 4, **characterized in that** the clutch disk arrangement (21) has a stop (24) at a maximum relative rotation or a maximum transmission torque between the clutch disk (18) and the output shaft (28), wherein the stop (24) limits a further relative rotation of the clutch disk (18) with respect to the output shaft (28).

6. The powertrain according to claim 5, **characterized in that** the stop (24) comprises buffer elements, which in the case of the maximum relative rotation between the clutch disk (18) and the output shaft (28) produces a contact between the clutch disk (18) and the output shaft (28), which limits a further relative rotation of the clutch disk (18) with respect to the output shaft (28).

7. The powertrain according to one of the preceding claims, **characterized in that** the maximum transmission torque at which the stop (24) of the clutch disk arrangement (21) is effective is less than the maximum engine torque of the internal combustion engine (2).

8. The powertrain according to one of the preceding claims, **characterized in that** the maximum transmission torque at which the stop (24) of the clutch disk arrangement (21) is effective is less than 75% of the maximum engine torque of the internal combustion engine (2).

9. The powertrain according to one of the preceding claims, **characterized in that** the maximum transmission torque at which the stop (24) of the clutch disk arrangement (21) is effective is less than 55% of the maximum engine torque of the internal combustion engine (2).

## Revendications

1. Chaîne cinématique (1) pour un véhicule automobile comprenant un moteur à combustion interne (2), un volant d'inertie à double masse (4) avec au moins un amortisseur principal (7) ainsi qu'un embrayage de véhicule (16), l'embrayage de véhicule (16) comprenant un agencement de disque d'embrayage (21) avec un amortisseur de vibrations en torsion (22), la raideur de ressort d'un pré-amortisseur (8) et de l'amortisseur principal (7) du volant d'inertie à double masse (4) ainsi que de l'amortisseur de vibrations en torsion (22) de l'agencement de disque d'embrayage (21) et le moment d'inertie du volant d'inertie à double masse (4), de l'agencement de disque d'embrayage (21) et de la chaîne cinématique disposée en aval des roues motrices (33a, 33b) étant choisis de telle sorte que la seconde fréquence propre du volant d'inertie à double masse (4) soit intérieure au régime de ralenti du moteur à combustion interne (2).

2. Chaîne cinématique selon la revendication 1, **caractérisée en ce que** la seconde fréquence propre du volant d'inertie à double masse (4) est située en dessous de 800 1/min.

3. Chaîne cinématique selon la revendication 1 ou 2, **caractérisée en ce que** l'amortisseur de vibrations en torsion (22) de l'agencement de disque d'embrayage (21) comprend au moins un accumulateur d'énergie (25), qui permet une rotation relative du disque d'embrayage (18) par rapport à un arbre entraîné (28) contre une force de rappel engendrée par l'accumulateur d'énergie (25).

4. Chaîne cinématique selon la revendication 3, **caractérisée en ce que** l'accumulateur d'énergie comprend au moins un ressort en arc (25) compressible dans une cage de disque d'embrayage (26) contre une joue de disque d'embrayage (27).

5. Chaîne cinématique selon la revendication 3 ou 4, **caractérisée en ce que** l'agencement de disque d'embrayage (21) présente une butée (24) lors d'une rotation relative maximale ou d'un couple transmissible maximal entre le disque d'embrayage (18) et l'arbre entraîné (28), la butée (24) limitant une rotation relative supplémentaire du disque d'embrayage (18) par rapport à l'arbre entraîné (28).

6. Chaîne cinématique selon la revendication 5, **caractérisée en ce que** la butée (24) comprend des éléments tampon, qui, lors de la rotation relative maximale entre le disque d'embrayage (18) et l'arbre entraîné (28), créent un contact entre le disque d'embrayage (18) et l'arbre entraîné (28), qui limite une rotation relative supplémentaire du disque d'embrayage (18) par rapport à l'arbre entraîné (28).

7. Chaîne cinématique selon l'une quelconque des revendications précédentes, **caractérisée en ce que** le couple transmissible maximal, auquel la butée (24) de l'agencement de disque d'embrayage (21) devient effective, est inférieur au couple moteur maximal du moteur à combustion interne (2).

8. Chaîne cinématique selon l'une quelconque des revendications précédentes, **caractérisée en ce que** le couple transmissible maximal, auquel la butée (24) de l'agencement de disque d'embrayage (21) devient effective, est inférieur à 75 % du couple moteur maximal du moteur à combustion interne (2).

9. Chaîne cinématique selon l'une quelconque des revendications précédentes, **caractérisée en ce que** le couple transmissible maximal, auquel la butée (24) de l'agencement de disque d'embrayage (21) devient effective, est inférieur à 55 % du couple moteur maximal du moteur à combustion interne (2).
